# EUROPEAN PATENT SPECIFICATION

(11) **EP 1 701 860 B1**
(45) Date of publication and mention of the grant of the patent: **15.08.2007**
(21) Application number: 03756763.3
(22) Date of filing: 22.10.2003
(51) Int. Cl.: B60N 2/02, B62D 25/20, B60P 7/08

(54) **IMPROVED FLOOR MOUNTED ON THE BOTTOM PLATE OF TRANSPORT VEHICLES FOR FASTENING CHAIRS / SEATS AND WHEELCHAIRS**
AUF DER BODENPLATTE EINES FAHRZEUGS ANGEBRACHTER VERBESSERTER FUSSBODEN ZUR BEFESTIGUNG VON STÜHLEN, SESSELN UND ROHLSTÜHLEN
PLANCHER AMELIORE MONTE SUR LA PLAQUE INFERIEURE DE VEHICULES DE TRANSPORT POUR FIXER DES FAUTEUILS, DES SIEGES ET DES CHAISES ROULANTES

(43) Date of publication of application: 20.09.2006
(73) Proprietor: Beheers & Beleggingsmaatschappij Verachtert B.V., 5334 Le Velddriel (NL)
(72) Inventor: VAN DER VAART-JONG, Helena Bibi, NL-5330 AB Kerkdriel (NL); KUIPERS, Roy Gert Arnold, NL-5330 AB Kerkdriel (NL); SCHOUTEN, Marcel Johannes Hendricus, NL-5330 AB Kerkdriel (NL)
(74) Representative: Lips, Hendrik Jan George
(86) International application number: PCT/NL2003/000714
(87) International publication number: WO 2005/037597

(56) References cited:
- WO-A-01/38127
- DE-A- 19 851 392
- DE-U- 29 500 474
- GB-A- 2 321 626

## Description

The present invention relates to a device constructed as floor plate or slab or floor and consists of rail section and floor section parts and is fastened on the bottom plate of transport vehicles, such as vehicles with load floors for conversion to mini busses, according to the strict rules applicable for passenger transport up to 8 people, ambulances, trains, busses, trams, airplanes and such, in which on the mentioned floor plate or floor chairs/seats and wheelchairs are attachable, in which the mentioned fastening to the bottom plate can be done in a mechanical as well as a chemical way, in which the rail- and floor section parts are applied in a longitudinal direction of the transport vehicle, in which the mentioned chairs/seats can be coupled, mostly without tools in a so called chair/seat track on the mentioned rail section parts.

A somewhat similar floor is known from the patent document EP 1028 885 (=WO 99/25601) from CHRISTENSEN, Martin (DK), Basjstrup Bygade 57, Bajstrup, DK-6360 Tinglev (DK). The invention concerns transport means, in which the floor consists of a plate, which is adjusted to the bottom plate and on which several chairs/seats or other help means for passenger transport can be fastened, in which the mentioned floor plate is provided with multiple recesses, which are divided over the surface in a suitable way, in which in the mentioned recesses of the mentioned plate fastening means for chairs and such can be applied. The floor with its many recesses has a very high flexibility for furnishing mini busses, in which the chairs are fastened to the floor plate, in which the floor plate, which is fastened to the bottom plate of the vehicle can absorb extra collision energy, so that the passengers can be transported more safely in the concerned vehicle.

The mentioned floor plate is fastened to the chassis beam and bottom plate by means of brackets with bolts. The plates have floor section parts with an inverted U-shape. Further the invention consists of floor elements, which are made through aluminium extrusion and roughly have a hollow rectangular cross-section internally provided with ridges. The raised side edges are constructed in such a way to lay form-matching onto each other. Further, through extrusion also rail section parts are available which can be inserted in the floor between the floor section parts. The rail section parts have a dovetail shape in vertical sense for inserting a dovetailed section for fastening a chair/seat leg, which is done with bolts.

The interconnection between floor section parts and, if necessary, rail section parts is done by means of adhesion, welding and such. Although in principle the above mentioned floor has a good basis, which is more or less known from the state of the art, it still has quite a number of disadvantages being, that fastening the floor sections with bolts onto and through the bottom plate is relatively disadvantageous because of possible rusting, possible dissolution of the guarantee by the dealer and it is also very labour-intensive. Also, at least two rail section parts are necessary for each chair or seat, which produce or create rather many rail section parts with grooves or dovetail sections in the floor. Also, the embodiment of the floor with many divided openings gives an untidy appearance and stands in the way for a good finishing with a floor covering material.

Further, it is a disadvantage, that the upper side of the created floor is not flat (mounting rubbers, etc.), through which a less attractive embodiment of the floor plate is created.

The described disadvantages mainly still remain when the floor is glued to the bottom plate of the vehicle.

It remains a disadvantage that the rail section part with a separate insert rail is rather complicated and expensive and for one chair/seat two of these rail section parts with accessories must be attached.

Then, the floor section part has a rather broad design and can only be mutually glued on the tip surfaces, through which the interconnection is less suitable and strong.

A floor device according the preamble of claim 1 is known from GB-A-2 321 626.

From the aforementioned information it appears that the known floor designs, constructed as a floor plate constructed of rail and floor section parts to be applied onto the bottom plate of transport vehicles have a number of disadvantages.

The aim of the present invention is to provide such a modified and improved floor constructed of rail- and floor section parts that the disadvantages are eliminated and in which the device constructed as a floor plate can be put onto the market in a very economically responsible way.

For this purpose a device according claim 1 is proposed.

The advantage is a flat floor plate onto which in a very efficient way chairs and wheelchairs can be mounted and which has a very professional design as well in appearance as use.

Further the device according to the invention is further developed in such a way, that the mentioned rail section part has a box-shaped rectangular cross-section with raised ridges with bevelled flanges, to form a continuous narrow open slit upwards, in which the raised edges of the mentioned rail section part show special continuous lockable projections for coupling to special lockable projections of floor section parts situated below.

The advantage is, that the floor plate forms a whole with regard to the transverse force and moment working.

Further, the device according to the invention is further developed in such a way, that on the inside of the bevelled flanges a serration is provided for form-matching placement of the special T-headed bolt with operating lever for fastening the base plate of the chair/seat to be mounted.

The advantage is that mounting the base plate of the chairs can be done at every distance between them in the transport vehicle.

Further, the device according to the invention is further developed in such a way, that the mentioned special T-headed bolt for the chair/seat attachment is constructed in such a way, that when the T-headed bolt is stuck into the slit and is finished in such a way, that after a quarter of a turn, it fits form-matching in the mentioned serration on the inner side of the rail section part.

The advantage is that sliding in longitudinal direction and naturally crosswise direction of the chair/seat in relation to the floor is impossible.

Furthermore, the device according to the invention is further developed in such a way, that the mentioned special T-headed bolt for fastening the base plate of the chair/seat legs of the other end is provided with a locking pivotable eccentric construction with an operating mechanism constructed as a lever for a spring-loaded support on a matching cylindrical ring and thus clamps the base plate of the chair/seat legs onto the mentioned rail section part of the floor plate.

The advantage is that the base plate of the chair/seat legs can be fastened quickly and safely onto the floor plate.

Furthermore, the device according to the invention is further developed in such a way, that the mentioned special coverable recesses in the floor section parts for retractors of the securing belts of wheelchairs can consist of a lid used as a lever and lock, so it acts as a ratchet pawl to haul in the securing belt of a safety belt, by pulling out the mentioned lid and locking again by sliding back the mentioned lid and folding it in, in which fastening of the securing belt is done by means of toothed wheels and a ratchet construction and that by certain placement of retractors over the floor construction, large as well as small wheelchairs can be transported. On the other side it must be noted, that also two different types of retractors can be mounted into the recesses.

The advantage is an interlocking for fastening large and small wheelchairs which is safe and easy in use for a chosen placement of wheelchairs with different sizes.

The preferred construction of the invention will be described by way of example, and with reference to the accompanying drawing.

In which:
- Fig. 1A/1B: shows a view in oblique projection of the floor plate according to a preferred embodiment of the invention which is going to be placed on (figure 1A) and is placed on the bottom plate of the transport vehicle (figure 1B);
- Fig. 2A/2B: shows a cross-section over the floor plate with uncoupled rail and floor section parts (figure 2A) and a cross-section in which the rail- and floor section parts are coupled to each other and placed onto the bottom plate of the transport vehicle and constructed according to a preferred embodiment of the invention;
- Fig. 3: shows a cross-section and in oblique projection the rail section part, in which according to a preferred embodiment the serration with the heart-to-heart distance S is indicated;
- Fig. 4: shows a view in perspective of the special T-headed bolt with lockable pivotable eccentric construction with lever as a quick-connector for fastening the base plate of the chair/seat legs to the rail section part;
- Fig. 5: shows a view in oblique projection of the connection with the special T-headed bolt as quick-connector of the base plate of the chair/seat legs to the rail section part;
- Fig. 6: shows a cross-section of the line VI of figure 5;
- Fig. 7A up to 7E: show views in oblique projection of the special coverable recesses in the floor section parts with retractors with ratchet construction for fastening wheelchairs in several phases according to a preferred embodiment of the invention;
- Fig. 8: shows a view in oblique projection of the used retractors with ratchet construction of figures 7A up to 7E; and
- Fig. 9: shows a view in oblique projection of the used common retractor.

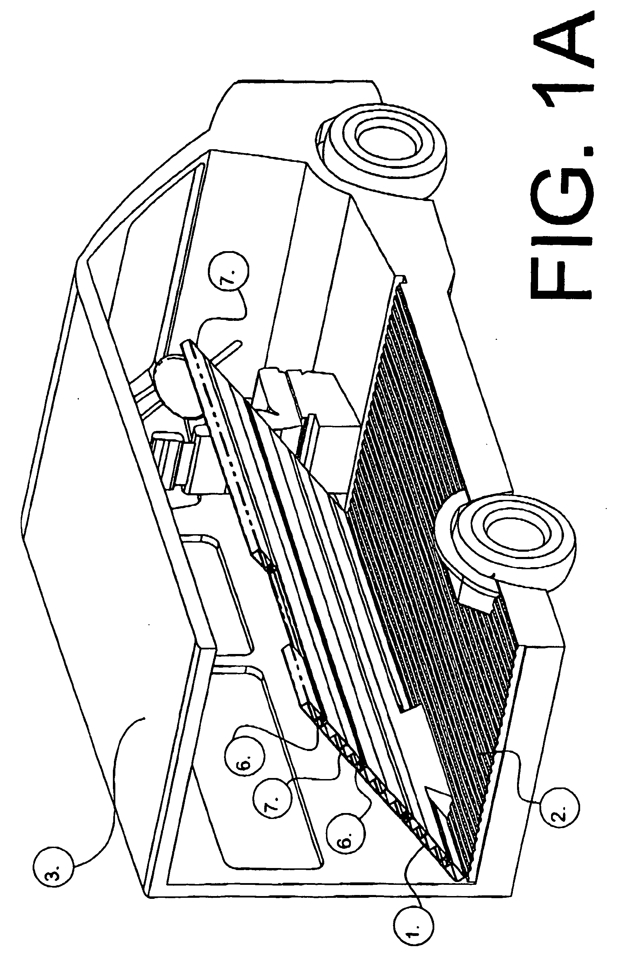

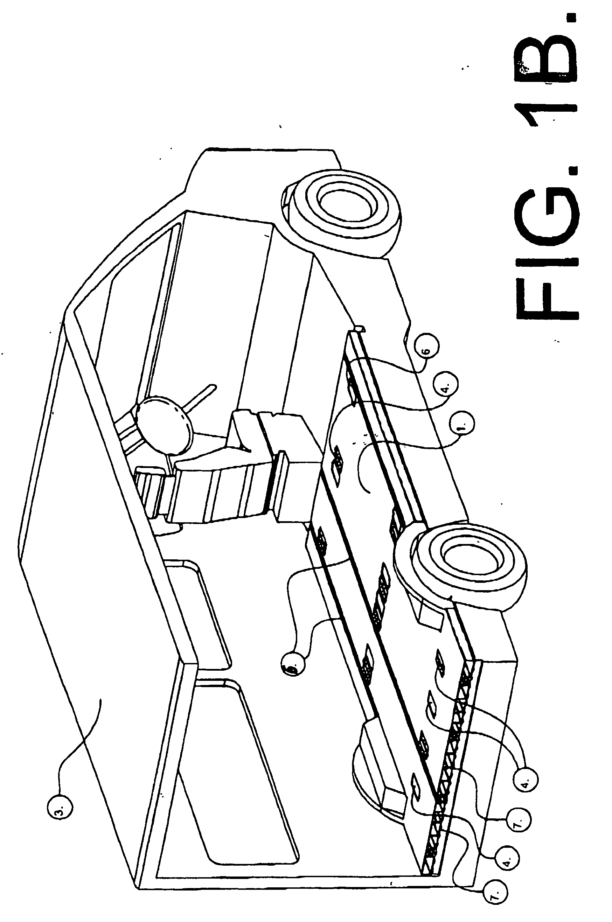

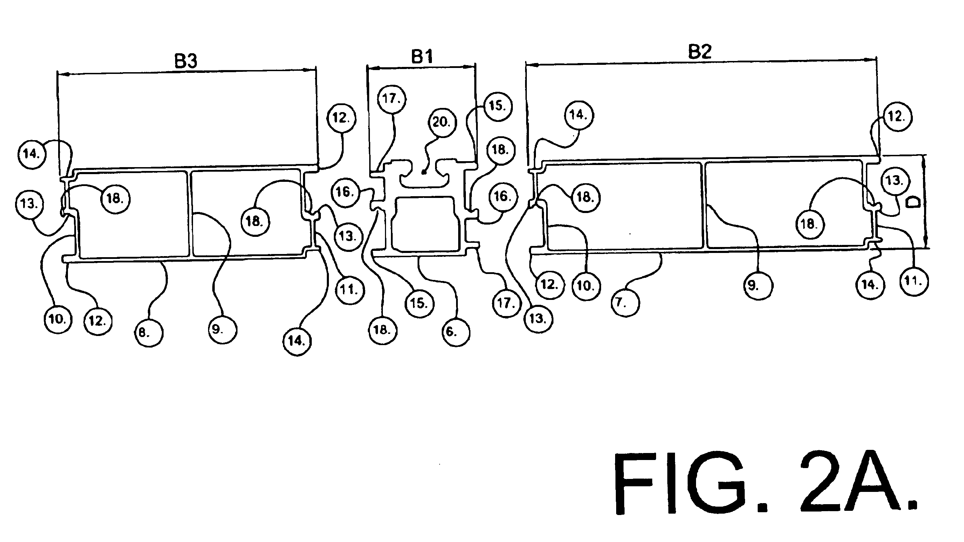

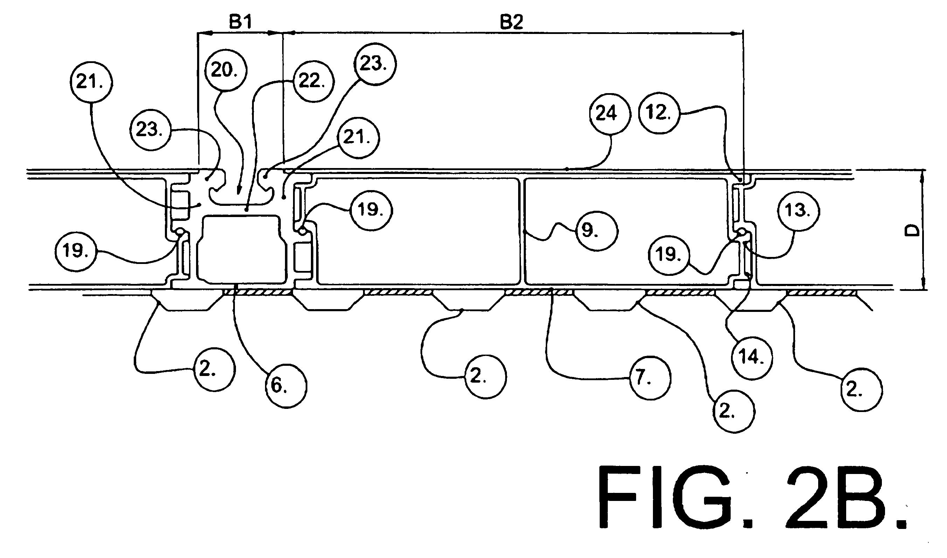

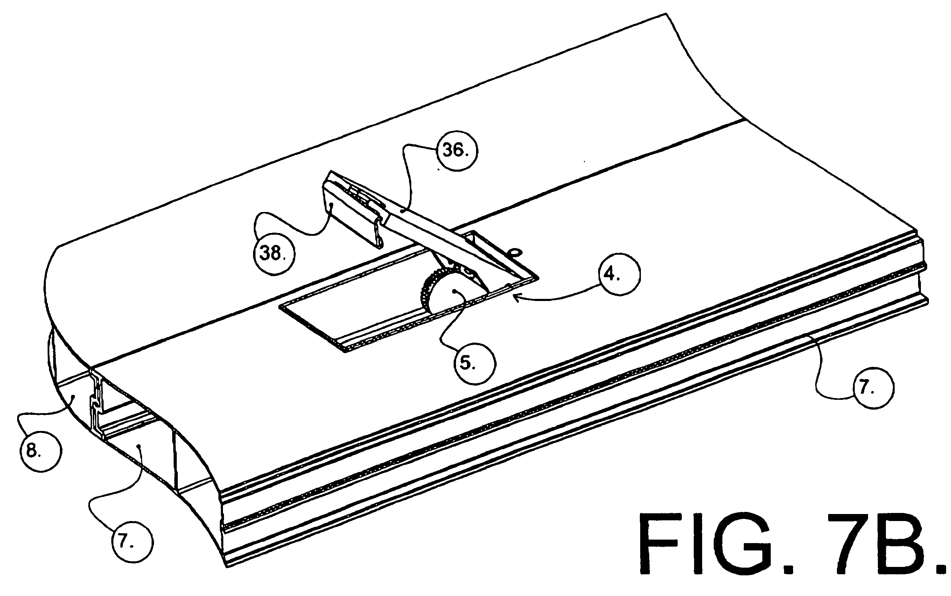

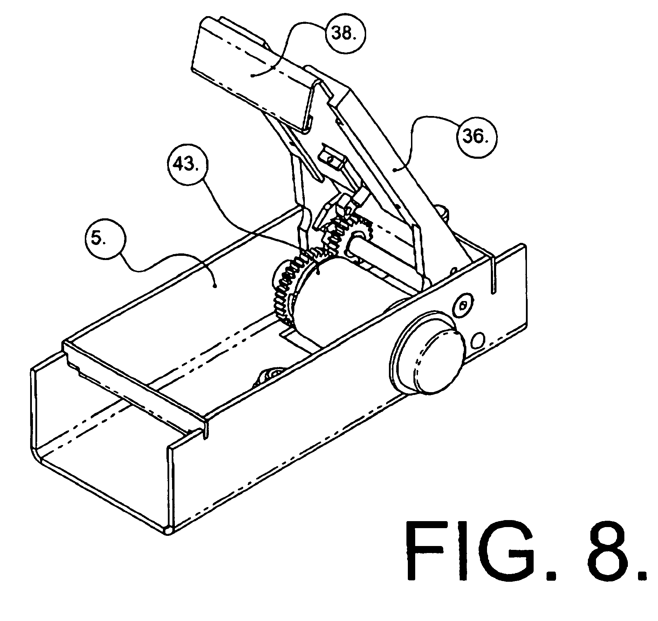

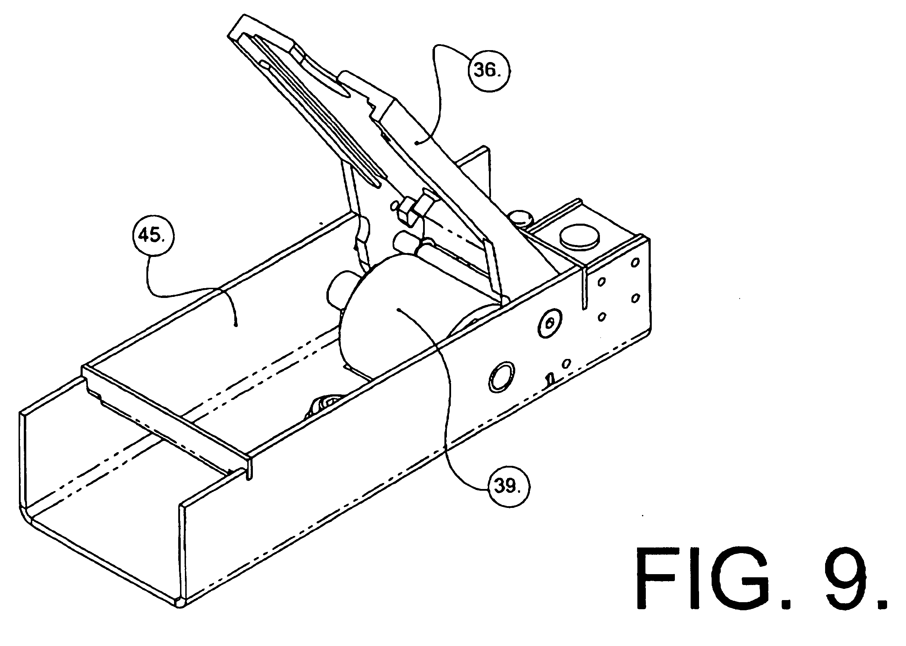

Figure 1A shows in view and in oblique projection the floor plate 1 according to a preferred embodiment of the invention, in which this floor plate 1 is placed on the corrugated bottom plate 2 of a transport vehicle 3, in which the side and back side of the transport vehicle 3 have been left out. On the corrugations of the bottom plate 2, which actually forms a corrugated section, a not indicated layer of plastic glue or mastic has been applied. In figure 1B placement of the whole floor plate 1 is roughly completed, meaning the floor covering material and such must still be applied. In the floor plate 1 the coverable recesses 4 with the retractors 5 with ratchet construction and the common retractors 45 are applied and namely for the buyer of the minibus or transport vehicle 3 in a suitable way. For the retractors 5 see figures 7B up to 7E and figure 8 and for the common retractors 45 see figure 9. Further, three rail section parts 6 are visible. Beside the rail section part 6 lay the floor section parts 7 and 8, as clearly shown in figures 2A and 2B.

The thickness D of the rail and floor section parts 6, 7, 8 is approximately 60 mm and the working width of the rail section part 6 is approximately 60 mm and that of the floor section part approximately 180 respectively 230 mm. In figure 2A the required wall thicknesses, which are necessary for the demanded strength and rigidity are schematically indicated. In the floor section parts 7, 8 another centre ridge 9 is applied in the middle of the profile for more rigidity. The vertical side ridges 10, 11 of the floor section parts 7, 8 are receding in vertical sense and show continuous projections 12, 13, 14 which fit form-matching onto the continuous projections 15, 16, 17 of the rail section part 6. Further, it is shown that the in accordance continuous projection 12, 13, 14 of the floor section parts 7, 8 are applied left and right in reverse order. The same counts for the continuous projections 15, 16, 17 of the rail section part 6. The latter is done to be able to create a floor plate with the sections in the inverted position and with that make them repeatedly fit form-matching against each other.

The continuous projections 13 and 16 further show a half-circle-shaped recess 18 to, as shown in figure 2B, to be locked with tensile strength with a continuous round thread profile 19. Further, if required glue can also be used at the head faces.

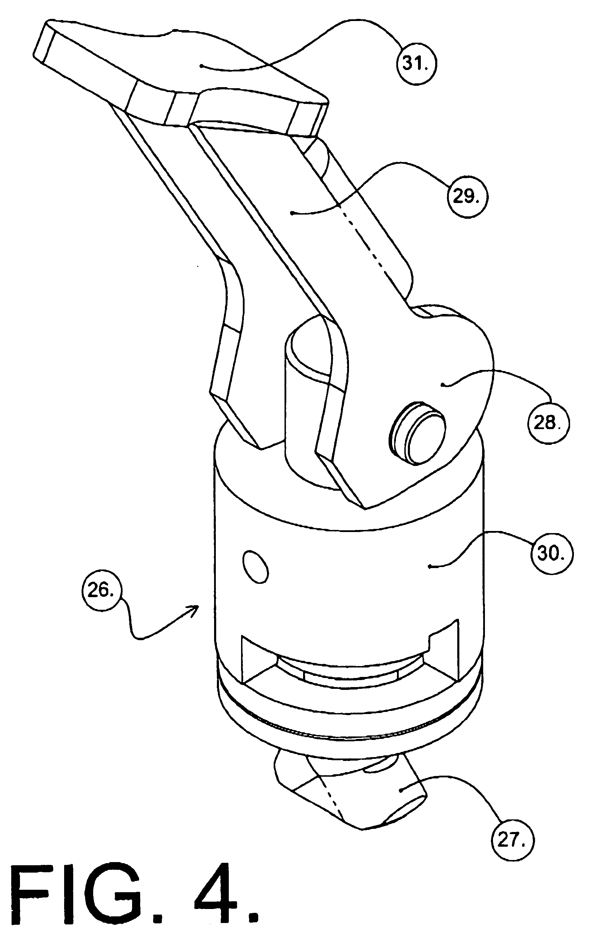

In the cross-section of figure 2B of the rail section part 6 the slit 20 for receiving the special T-headed bolt with accessories (see figure 4) is applied as quick-connector. With regard to mechanical demands the thicknesses of the walls 21, 22 of the rail section are rather sturdy to keep the chair/seat with the rail section part 6 fastened with sufficient safety at a collision. Further the rail section 6 is provided with a small elevation 23 as thick as the floor covering 24, which can be vinyl or carpeting.

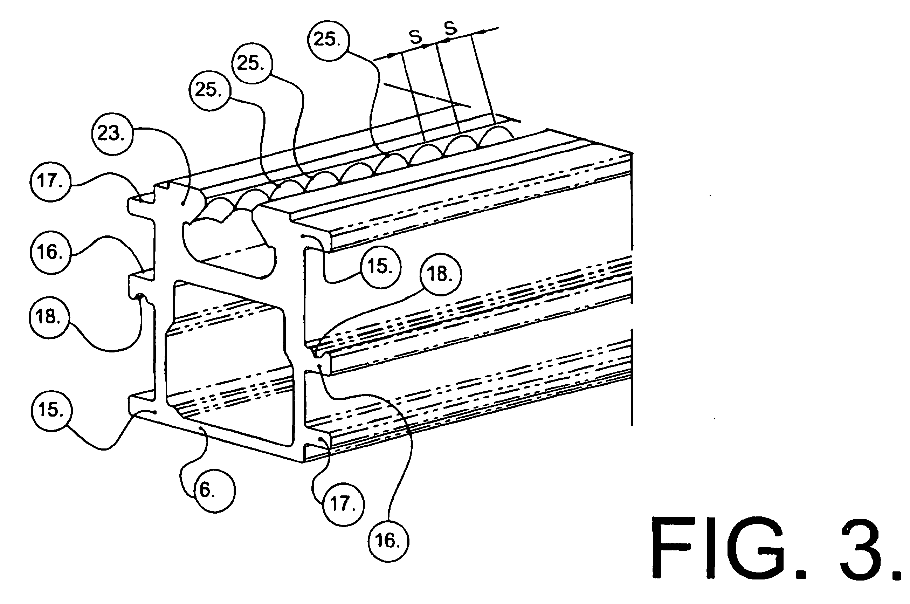

Figure 3 shows in oblique projection the rail section part 6, in which according to a preferred embodiment the serrations 25 are applied to be able to place the special T-headed bolt 26 (figure 4) with lockable pivotable eccentric construction with a very short pitch S, being the quick-connection of the chair/seat to the floor plate 1.

Figure 4 further shows in oblique projection the special T-headed bolt 26. The hammerhead 27 is finished in a halve circle at the top side and is rotatable to be placed in the serrations 25 through the slit 20 (figure 3).

The eccentric construction 28 with lever 29 and the spring loaded support on the cylinder ring 30 is clearly shown. The lever 29 can be operated with the foot pedal 31 and the construction can be seen as the quick-connector for the chair/seat to the floor plate 1. With that, it can be stated that the T-headed bolt can also be provided with a screw thread on the shank for a common bolt for a normal long lasting connection.

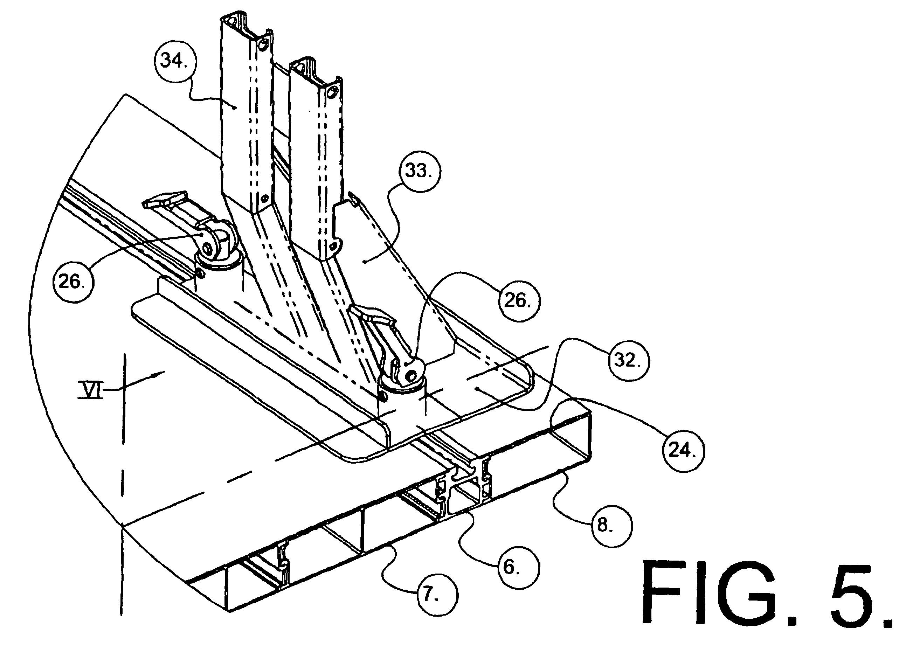

Figure 5 shows a view in oblique projection of the attachment with the special T-headed bolt 26 of the base plate 32 of the chair/seat legs 33, 34 to the rail section part 6. The base plate 32 of the passengers seat is, for example, attached to a single rail section part 6 with two special T-headed bolts 26, and due to the design of one and other this connection is moment tight in all directions, so that a very stable set-up of the chair/seat is created in no time.

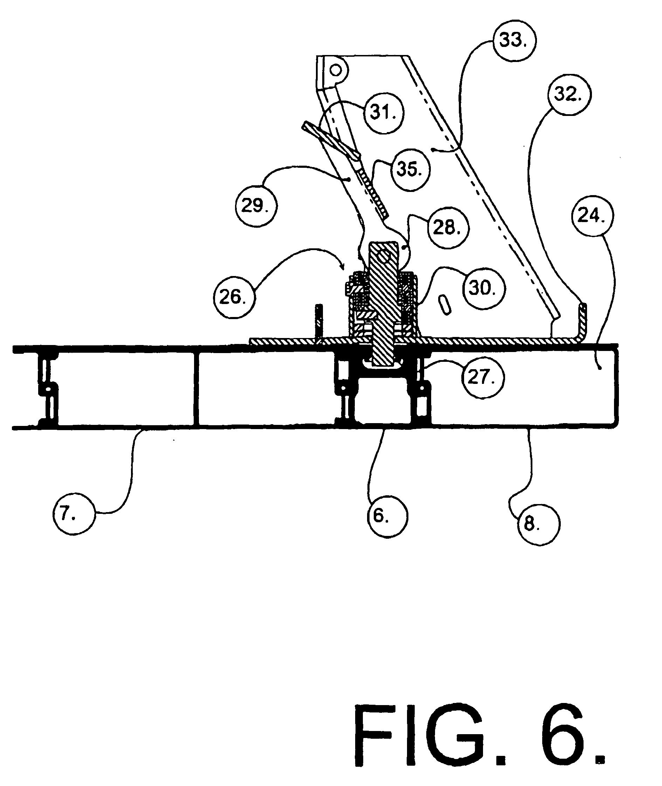

Figure 6 shows a cross-section over the line VI of figure 5. Here it is shown in detail how the locking of the base plate 32 to the rail section part 6 is executed. The unlocking is done with a second lever 35. It is also possible to use an extra ratchet security.

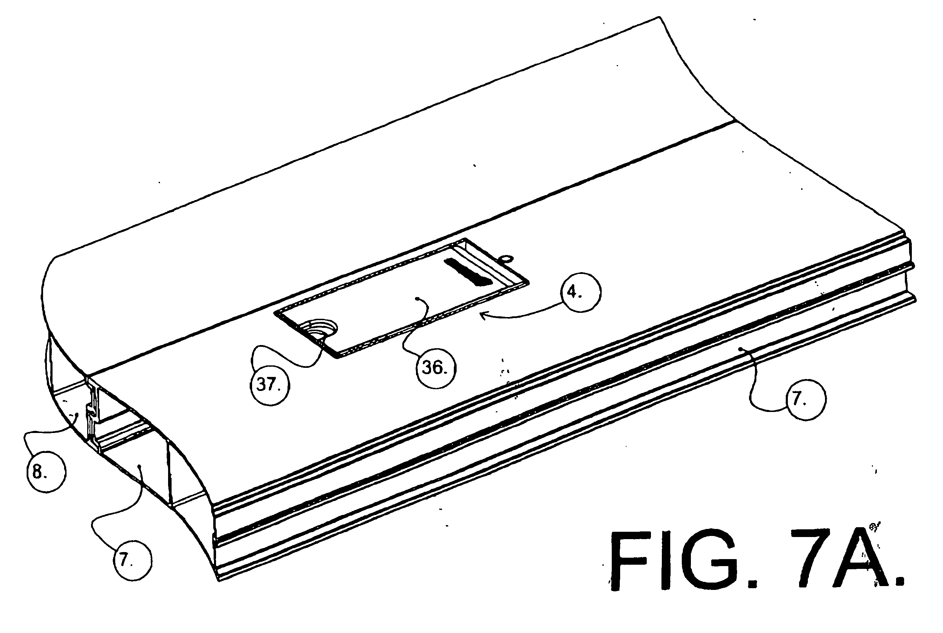

Figures 7A up to 7E show views in oblique projection of the special coverable recesses 4 (see figure 1B) in the floor section parts 7, 8 with retractors 5 with ratchet construction 43 (see figures 7B up to 7E and figure 8). The special coverable recess 4 is provided with a pivotable lid 36, that can easily be opened with a finger through recess 37. Figure 7B shows the pivotable lid 36 opened and the retractor 5 with ratchet construction 43 can be seen. The pivotable lid 36 has a telescopic part 38 to create a larger lever.

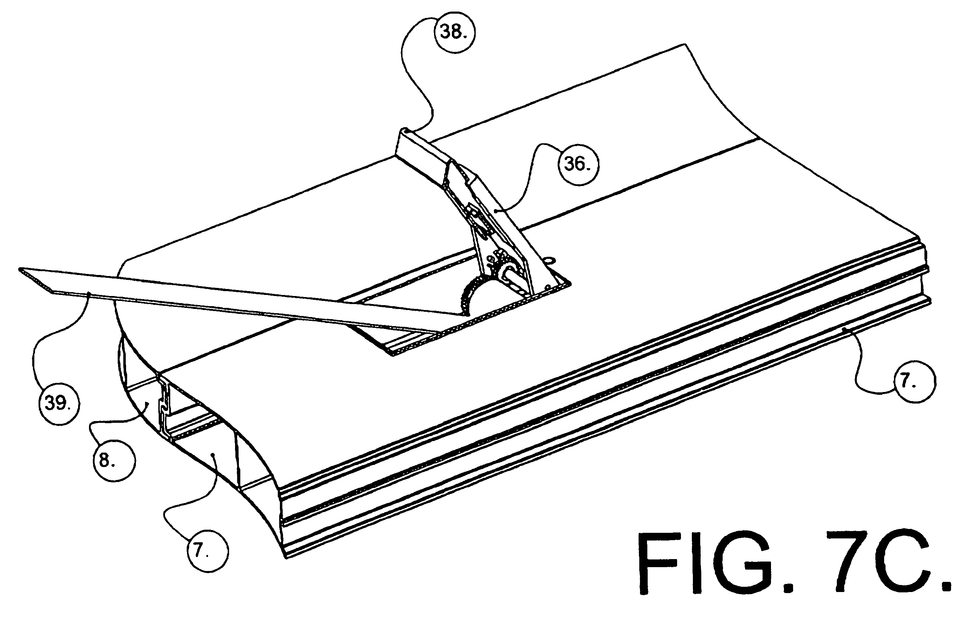

In figure 7C a securing belt 39 for the wheelchair is pulled out and tensioned by moving the extended lever of the lid 36 back and forth.

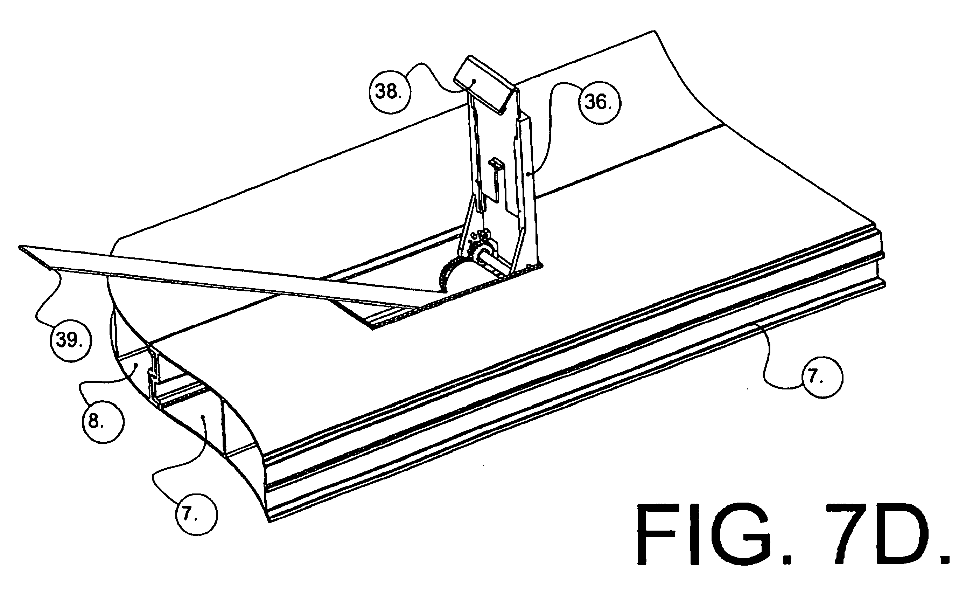

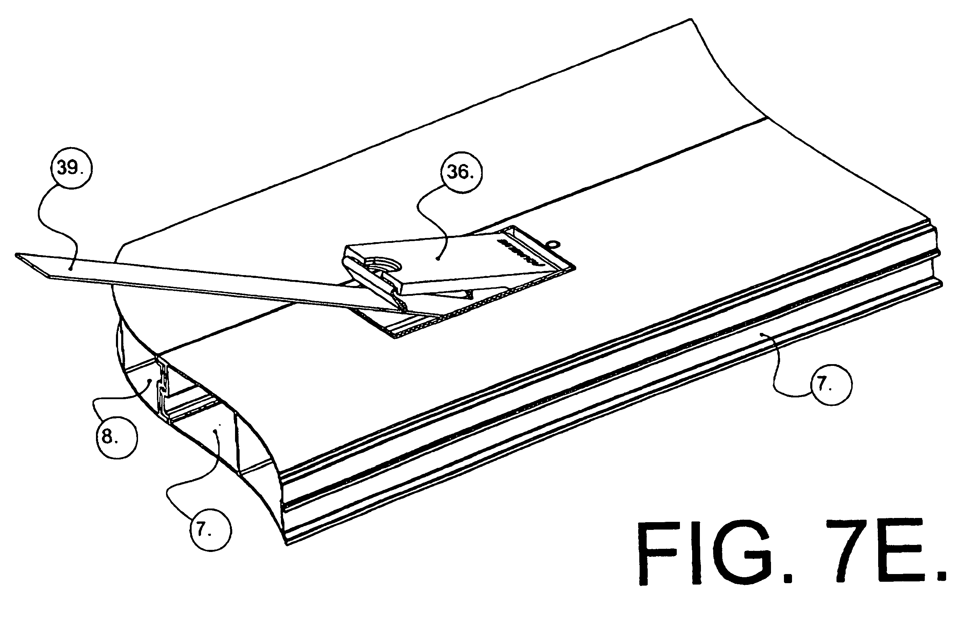

In figure 7D the securing belt 39 is tensioned and the telescopic part 38 is slid back in, through which locking takes place and the pivotable lid can be pushed back in the position of figure 7E.

Figure 8 shows in more detail the retractor 5 with ratchet construction 43 in oblique projection, in which the different parts are as usual and a locking with the telescoping part 38 is added to the pivotable lid 36. Here it must be noted, that the mentioned retractors are situated in the floor.

Figure 9 shows a common retractor 45 also for securing persons and wheelchairs, in which the principle of a common retractor is used.

Placement of the different types of retractors is done in consultation with the client.

## Claims

1. Device constructed as floor plate or floor and consists of rail section and floor section parts and is fastened on the bottom plate of transport vehicles, such as vehicles with load floors for conversion to mini busses, according to the strict rules applicable for passenger transport up to 8 people, ambulances, trains, busses, trams, airplanes and such, in which on the mentioned floor plate or floor chairs/seats and wheelchairs are attachable, in which the mentioned fastening to the bottom plate can be done in a mechanical as well as a chemical way, in which the rail- and floor section parts are applied in a longitudinal direction of the transport vehicle, in which the mentioned chairs/seats can be coupled, mostly without tools in a so called chair track on the mentioned rail section parts, wherein on each chair track the chairs/seats can be coupled to a single rail section part (6), in which the mentioned rail section part (6) has a continuous narrow slit (20) on the upper side to internally form a mechanical strong U-shape with bevelled flanges, [in which the material of the rail- and floor section parts (6, 7, 8) is a rigid and ductile material with a relatively high bending and shear strength, in which the mentioned U-shape of the mentioned rail section part (6) is provided with relatively thick sides (21) to absorb extreme intermittent load, in which rail and floor section parts (6, 7, 8) are mechanically interlockable and the floor can be fastened at the top side of the corrugated section of the bottom plate (2) of the transport vehicle, **characterized in that**, the bevelled flanges are provided with a serration (25) with a short pitch on the inside for form-matching receipt of special T-headed bolts (26) for fastening the base plates (32) of the chairs/seats, in which fastening or locking of the mentioned T-headed bolt (26) in the floor is done with an instrument provided with a lever (29), in which in the floor section parts (7, 8) special coverable recesses (4) are applied in a suitable pattern for retractors (5) with ratchet construction (43) and common retractors (45) of securing belts (39) for fastening wheelchairs.

2. Device as claimed in claim 1, **characterized in that**, the construction of the mentioned floor (1) is done in such a way that it starts and ends with a fitting section of the floor section (8), that connects to a rail section part (6) and following two floor section parts (7) and so on, in which the rail section part (6) can also be turned upside down to lay with its flat bottom side upwards if no rail section part (6) is necessary locally.

3. Device as claimed in claims 1 and 2, **characterized in that**, the mentioned rail section part (6) has a box-shaped rectangular cross-section with raised ridges with bevelled flanges to form a continuous narrow open slit (20) upwards, in which the raised edges of the mentioned rail section part (6) show special continuous lockable projections (15, 16, 17) for coupling to special lockable projections (12, 13, 14) of the floor section parts (7, 8).

4. Device as claimed in claims 1 and 3, **characterized in that**, at the inside of the bevelled flanges a serration (25) is applied for form-matching placement of the special T-headed bolt (26) with operating lever (29) for fastening the base plate (32) of the to be mounted chair/seat.

5. Device as claimed in claims 1, 2 and 3, **characterized in that**, on each raised side of the rail section part (6) three special continuous lockable cross-projections (15, 16, 17) are attached, in which the upper and lower continuous projection (15, 17) is constructed flat for, in vertical sense, locking the adjacent floor section parts and the intermediate continuous projection (16) is provided with a half-round continuous recess (18) for connection to a similar finishing of the raised side of the adjacent floor section part (7, 8), through which by means of a longitudinal round-thread profile (19), a strong horizontal locking of the rail- and floor section parts (6, 7, 8) is created.

6. Device as claimed in aforementioned claims, **characterized in that**, the thickness of the mentioned floor is approximately 60 mm, that the rail section part (6) is approximately 60 mm wide and that the floor section part (7, 8) can be approximately 180 mm and 230 mm wide and 60 mm high.

7. Device as claimed in aforementioned claims, **characterized in that**, the floor section parts (7, 8) have a hollow rectangular cross-section consisting of two boxes in which the outer raised sides show a vertical recede to suitably connect to the mentioned rail section part (6) or floor section part (7, 8).

8. Device as claimed in claims 1 and 4, **characterized in that**, the mentioned special T-headed bolt (26) for the chair/seat attachment is constructed in such a way, that when the T-headed bolt (26) is stuck into the slit (20) and is finished in such a way that after a quarter of a turn, it fits form-matching in the mentioned serration (25) on the inner side of the rail section part (6).

9. Device as claimed in claim 8, **characterized in that**, the mentioned special T-headed bolt (26) for fastening the base plate (32) of the chair/seat legs (33, 34) is, on the other end provided with a locking pivotable eccentric construction (28) with an operating mechanism constructed as a lever (29) for a spring-loaded support on a matching cylindrical ring (30) and thus clamps the base plate (32) of the chair/seat legs (33, 34) onto the mentioned rail section part (6) of the floor plate (1).

10. Device as claimed in claims 1 to 3, **characterized in that**, the material of the rail- and floor section parts (6, 7, 8) can be aluminium with a minimum tensile strength at an 0,2% tensile limit of 90 Newton per mm².

11. Device as claimed in aforementioned claims, **characterized in that**, that the mentioned rail- and floor section parts (6, 7, 8) are fastened on the corrugation of the loading floor (2) of the vehicle by means of glue, in which the glue/mastic must be a very elastic and energy absorbing one.

12. Device as claimed in claim 11, **characterized in that**, the mentioned plastic glue consists of a glue of a polyurethane with a tensile of approximately 400 percent.

13. Device as claimed in claim 1, **characterized in that**, the mentioned special coverable recesses (4) in the floor section parts (7, 8) for retractors (5) of the securing belts (39) of wheelchairs can consist of a lid (36) used as a lever (38) and lock, so it acts as a ratchet pawl to haul in the security belt (39) or a safety belt, by pulling out the mentioned lid (36) and locking again by sliding back the mentioned lid (36) and folding it in, in which fastening of the security belt (39) is done by means of toothed wheels and a ratchet construction and that by a certain placement of retractors (5) over the floor construction, large as well as small wheelchairs can be transported.

## Patentansprüche

1. Vorrichtung, die als Bodenplatte bzw. Boden aufgebaut ist, die aus Schienenprofil- und Bodenprofilteilen besteht und die am Bodenblech von Transportfahrzeugen, wie z. B. Fahrzeugen mit Ladeflächen zur Umwandlung in Minibusse nach den für Personenbeförderung bis zu acht Personen geltenden strengen Regeln, Krankenwagen, Zügen, Bussen, Straßenbahnen, Flugzeugen und dergleichen, befestigt wird,
wobei
- auf der Bodenplatte bzw. auf dem Boden Sessel/Sitze und Rollstühle befestigt werden können,
- die Befestigung am Bodenblech auf mechanische oder chemische Weise vorgenommen werden kann,
- die Schienen- und Bodenprofilteile in Längsrichtung des Transportfahrzeuges angeordnet sind und
- die Sessel bzw. Sitze meist ohne Werkzeuge in einer so genannten Sitzspur auf den Schienenprofilteilen gekoppelt werden können,
wobei
- in jeder Sitzspur die Sessel/Sitze mit einem einzelnen Schienenprofilteil (6) verkoppelt werden können,
- das Schienenprofilteil (6) an seiner Oberseite einen durchgehenden schmalen Spalt (20) aufweist, so dass innen eine mechanisch feste U-Form mit abgeschrägten Flankenabgeschrägten Flanken gebildet wird,
- das Material der Schienen- und Bodenprofilteile (6, 7, 8) aus einem stabilen und verformungsfähigen Werkstoff mit einer relativ hohen Biege- und Scherfestigkeit besteht und
- die U-Form des Schienenprofilteils (6) mit relativ dicken Flanken (21) versehen ist, um eine extreme aussetzende Belastung aufzufangen, und
wobei die Schienen- und Bodenprofilteile (6, 7, 8) mechanisch miteinander verriegelt werden können und der Boden an der Oberseite des welligen Profils des Bodenblechs (2) des Transportfahrzeuges befestigt werden kann,
**dadurch gekennzeichnet, dass** die abgeschrägtenabgeschrägten FlankenFlanken an der Innenseite mit einer Kerbzahnung (25) mit kurzer Teilung versehen sind, um Spezial-Hammerkopfschrauben (26) formschlüssig aufzunehmen, damit die Tragplatten (32) der Sessel/Sitze befestigt werden können,
wobei
- die Befestigung/Verriegelung der Hammerkopfschraube (26) im Boden anhand einer mit einem Hebel (29) versehenen Apparatur erfolgt und
- in den Bodenprofilteilen (7, 8} in einem geeigneten Muster spezielle abdeckbare Vertiefungen (4) für Aufroller (5) mit Ratschenvorrichtung (43) sowie gängige Aufroller (45) für Sicherungsgurte (39) zur Arretierung von Rollstühlen eingelassen sind.

2. Vorrichtung gemäß Anspruch 1, **dadurch gekennzeichnet, dass** der Aufbau des Bodens (1) so erfolgt, dass er mit einem Anbauglied des Bodenprofils (8), an das sich jeweils ein Schienenprofilteil (6) und darauf folgende zwei Bodenprofilteile (7) und so weiter anschließen, beginnt und endet, wobei das Schienenprofilteil (6) auch umgedreht werden kann, so dass es mit der flachen Unterseite nach oben zu liegen kommt, wenn an dieser Stelle kein Schienenprofilteil (6) benötigt wird.

3. Vorrichtung gemäß den Ansprüchen 1 und 2, **dadurch gekennzeichnet, dass** das Schienenprofilteil (6) einen kastenförmigen Rechteckquerschnitt mit oberen Schenkeln mit abgeschrägten Flanken hat, so dass ein durchgehender, nach oben offener schmaler Spalt (20) gebildet wird, wobei die Hochflanken des Schienenprofilteils (6) besondere durchgehende, verriegelbare Auskragungen (15, 16, 17) aufweisen, um sie mit besonderen verriegelbaren Auskragungen (12, 13, 14) der Bodenprofilteile (7, 8) verkuppeln zu können.

4. Vorrichtung gemäß den Ansprüchen 1 und 3, **dadurch gekennzeichnet, dass** an der Innenseite der abgeschrägten Flanken eine Kerbzahnung (25) zur formschlüssigen Platzierung der Spezial-Hammerkopfschraube (26) mit Hebel (29) zur Befestigung der Tragplatte (32) des zu montierenden Sessels/Sitzes angebracht ist.

5. Vorrichtung gemäß den Ansprüchen 1, 2 und 3, **dadurch gekennzeichnet, dass** an jeder Hochflanke des Schienenprofilteils (6) drei spezielle, durchgehende, verriegelbare seitliche Auskragungen (15, 16, 17) angebracht sind, wobei die obere und untere durchgehende Auskragung (15, 17) jeweils flach ausgebildet ist, um die angrenzenden Bodenprofilteile in vertikaler Richtung zu arretieren, und die dazwischen liegende durchgehende Auskragung (16) mit einer halbrunden durchgehenden Vertiefung (18) zur Verbindung mit einem ähnlich gearbeiteten Element der Hochflanke des Bodenprofilteils (7, 8) versehen ist, wodurch mittels eines Rundrillenprofils (19) eine stabile horizontale Verriegelung der Schienen- und Bodenprofilteile (6, 7, 8) gebildet wird.

6. Vorrichtung gemäß den vorgenannten Ansprüchen, **dadurch gekennzeichnet, dass** die Dicke des Bodens ca. 60 mm beträgt, das Schienenprofilteil (6) ca. 60 mm breit ist und die Bodenprofilteile (7, 8) ca. 180 mm bzw. 230 mm breit und 60 mm hoch sein können.

7. Vorrichtung gemäß den vorgenannten Ansprüchen, **dadurch gekennzeichnet, dass** die Bodenprofilteile (7, 8) einen hohlen Rechteckquerschnitt haben, der aus zwei Kästen besteht, wobei die äußeren Hochflanken einen Vertikal-Rücksprung aufweisen, um sie in geeigneter Weise mit dem Schienenprofilteil (6) bzw. Bodenprofilteil (7, 8) zu verbinden.

8. Vorrichtung gemäß den Ansprüchen 1 und 4, **dadurch gekennzeichnet, dass** die Spezial-Hammerkopfschraube (26) für die Sessel-/Sitzbefestigung so konstruiert ist, dass dann, wenn die Spezial-Hammerkopfschraube (26) in den Spalt (20) gesteckt wird und entsprechend feinbearbeitet ist, sie nach einer Vierteldrehung formschlüssig in der Kerbverzahnung (25) an der Innenseite des Schienenprofilteils (6) sitzt.

9. Vorrichtung gemäß Anspruch 8, **dadurch gekennzeichnet, dass** die Spezial-Hammerkopfschraube (26) zur Befestigung der Tragplatte (32) der Sessel-/Sitzbeine (33, 34) am anderen Ende mit einer drehbaren Exzenter-Verriegelungsvorrichtung (28) mit einem Betätigungsmechanismus versehen ist, der als Hebel (29) für eine federunterstützte Halterung auf einem passenden zylindrischen Ring (30) ausgelegt ist, und auf diese Weise die Tragplatte (32) der Sessel- bzw. Sitzbeine (33, 34) auf dem Schienenprofilteil (6) der Bodenplatte (1) festklemmt.

10. Vorrichtung gemäß den Ansprüchen 1 bis 3, **dadurch gekennzeichnet, dass** der Werkstoff der Schienen- und Bodenprofilteile (6, 7, 8) aus Aluminium mit einer Mindestzugfestigkeit von 90 Newton pro mm² bei einer Zuggrenze von 0,2 % bestehen kann.

11. Vorrichtung gemäß den vorgenannten Ansprüchen, **dadurch gekennzeichnet, dass** die Schienen- und Bodenprofilteile (6, 7, 8) mittels Kleber an der Wellung der Ladefläche (2) des Fahrzeugs befestigt sind, wobei der Kleber/Kitt sehr elastisch und energieabsorbierend ist.

12. Vorrichtung gemäß Anspruch 11, **dadurch gekennzeichnet, dass** der Kunststoffkleber aus einem Klebemittel aus Polyurethan mit einer Bruchdehnung von ca. 400 Prozent besteht.

13. Vorrichtung gemäß Anspruch 1, **dadurch gekennzeichnet, dass** die speziellen abdeckbaren Vertiefungen (4) in den Bodenprofilteilen (7, 8) für Aufroller (5) der Sicherungsgurte (39) für Rollstühle jeweils aus einer als Hebel (38) und Verschluss dienenden Klappe (36) bestehen können, so dass sie als Sperrklinke zum Einziehen des Sicherungsgurtes (39) oder eines Sicherheitsgurtes fungiert, indem die Klappe (36) durch Zurückschieben und Umlegen herausgezogen und wieder geschlossen wird, wobei die Fixierung des Sicherungsgurtes (29) mit Zahnrädern und einer Ratschenvorrichtung (43) erfolgt,
und dass durch eine bestimmte Anordnung von Aufrollern (5) auf der Bodenkonstruktion sowohl große als auch kleine Rollstühle befördert werden können.

## Revendications

1. Dispositif construit sous la forme d'une plaque de plancher ou d'un plancher, et constitué de parties de section de rail et de section de plancher, et est fixé sur la plaque inférieure de véhicules de transport, tels que des véhicules ayant des planchers de charge pour transformation en minibus, conformément aux règles strictes applicables au transport de passagers jusqu'à 8 personnes, ambulances, trains, bus, tramways, aéronefs, et similaire, dans lequel, des fauteuils/sièges et des fauteuils roulants peuvent être attachés sur la plaque de plancher ou le plancher mentionnés ci-dessus, dans lequel la fixation mentionnée sur la plaque inférieure peut être faite d'une manière mécanique de même que chimique, dans lequel les parties de section de rail et de plancher sont appliquées dans une direction longitudinale du véhicule de transport, dans lequel les fauteuils/sièges mentionnés peuvent être couplés, presque sans outil, dans ce qu'on appelle un chemin de fauteuil sur les parties de section de rail mentionnées, dans lequel sur chaque chemin de fauteuil, les fauteuils/sièges peuvent être couplés à une partie de section de rail unique (6), dans lequel la partie de section de rail mentionnée (6) a une fente étroite continue (20) sur le côté supérieur pour former intérieurement une forme en U mécaniquement résistante ayant des rebords biseautés, dans lequel le matériau des parties de section de rail et de plancher (6, 7, 8) est un matériau rigide et ductile ayant une résistance à la flexion et au cisaillement relativement élevée, dans lequel la forme en U mentionnée de la partie de section de rail mentionnée (6) est munie de côtés relativement épais (21) pour absorber une charge intermittente extrême, dans lequel des parties de section de rail et de plancher (6, 7, 8) peuvent être verrouillées mutuellement mécaniquement, et le plancher peut être fixé sur le côté supérieur de la section ondulée de la plaque inférieure (2) du véhicule de transport, les rebords biseautés sont munis d'une dentelure (25) ayant un court pas sur l'intérieur pour recevoir par correspondance de forme des boulons à tête en T spéciaux (26) pour fixer les plaques de base (32) des fauteuils/sièges, dans lequel une fixation ou un verrouillage du boulon à tête en T mentionné (26) dans le plancher est réalisée avec un instrument muni d'un levier (29), dans lequel, dans les parties de section de plancher (7, 8), des évidements spéciaux pouvant être recouverts (4) sont appliqués selon un motif adapté pour des rétracteurs (5) avec une construction de rochet (43) et des rétracteurs communs (45) de ceinture de sécurité (39) pour fixer des fauteuils roulants.

2. Dispositif selon la revendication 1, **caractérisé en ce que** la construction du plancher mentionné (1) est réalisée d'une telle manière qu'elle commence et se termine avec une section de montage de la section de plancher (8) qui se connecte à une partie de section de rail (6) et deux parties de section de plancher (7) suivantes, et ainsi de suite, dans lequel la partie de section de rail (6) peut également être tournée sens dessus dessous pour être disposée en ayant son côté inférieur plat vers le haut si aucune partie de section de rail (6) n'est nécessaire localement.

3. Dispositif selon la revendication 1 ou 2, **caractérisé en ce que** la partie de section de rail mentionnée (6) a une section transversale rectangulaire en forme de boîte ayant des arêtes en relief avec des rebords biseautés pour former une fente ouverte étroite continue (20) vers le haut, dans lequel les bords en relief de la partie de section de rail mentionnée (6) présentent des saillies continues spéciales pouvant être verrouillées (15, 16, 17) pour couplage à des saillies spéciales pouvant être verrouillées (12, 13, 14) des parties de section de plancher (7, 8).

4. Dispositif selon les revendications 1 et 3, **caractérisé en ce qu'**à l'intérieur des rebords biseautés, une dentelure (25) est appliquée pour une mise en place par correspondance de forme du boulon spécial à tête en T (26) avec le levier d'actionnement (29) pour fixation de la plaque de base (32) du fauteuil/siège devant être monté.

5. Dispositif selon la revendication 1, 2 et 3, **caractérisé en ce que** sur chaque côté en relief de la partie de section de rail (6) sont fixées trois saillies transversales continues spéciales pouvant être verrouillées (15, 16, 17), dans lequel les saillies continues supérieure et inférieure (15, 17) sont construites sous la forme d'une partie plate pour, dans un sens vertical, verrouiller les parties de section de plancher adjacentes, et la saillie continue intermédiaire (16) est munie d'un évidement continu en demi-cercle (18) pour connexion à une finition similaire du côté en relief de la partie de section de plancher adjacente (7, 8), à travers lequel, par l'intermédiaire d'un profil de filet rond longitudinal (19), un verrouillage horizontal résistant des parties de section de rail et de plancher (6, 7, 8) est créé.

6. Dispositif selon l'une quelconque des revendications précédentes, **caractérisé en ce que** l'épaisseur du plancher mentionné est d'approximativement 60 mm, **en ce que** la partie de section de rail (6) est approximativement de 60 mm de largeur, et **en ce que** la partie de section de plancher (7, 8) peut être d'approximativement 180 mm et 230 mm de large, et 60 mm de haut.

7. Dispositif selon l'une quelconque des revendications précédentes, **caractérisé en ce que** les parties de section de plancher (7, 8) ont une section transversale rectangulaire creuse constituée de deux boîtes, dans lequel les côtés en relief extérieurs présentent un évidement vertical pour connexion de manière adaptée à la partie de section de rail mentionnée (6) ou à la partie de section de plancher mentionnée (7, 8).

8. Dispositif selon les revendications 1 et 4, **caractérisé en ce que** le boulon spécial à tête en T mentionné (26) pour la fixation du fauteuil/siège est construit d'une manière telle que le boulon à tête en T (26) est enfoncé dans la fente (20), et est fini d'une manière telle qu'après un quart de tour, il s'agence par correspondance de forme dans la dentelure mentionnée (25) sur le côté intérieur de la partie de section de rail (6).

9. Dispositif selon la revendication 8, **caractérisé en ce que** le boulon spécial à tête en T mentionné (26) pour fixation de la plaque de base (32) des pieds de fauteuil/siège (33, 34) est, sur l'autre extrémité, muni d'une construction de verrouillage à excentrique pouvant pivoter (28) avec un mécanisme d'actionnement construit sous la forme d'un levier (29) pour un support chargé par ressort sur un anneau cylindrique correspondant (30), et immobilise ainsi la plaque de base (32) des pieds de fauteuil/siège (33, 34) sur la partie de section de rail mentionnée (6) de la plaque de plancher (1).

10. Dispositif selon l'une quelconque des revendications 1 à 3, **caractérisé en ce que** le matériau des parties de section de rail et de plancher (6, 7, 8) peut être de l'aluminium ayant une résistance à la traction minimum à une limite de traction de 0,2 % de 90 newtons par mm².

11. Dispositif selon l'une quelconque des revendications précédentes, **caractérisé en ce que** les parties de section de rail et de plancher mentionnées (6, 7, 8) sont fixées sur l'ondulation du plancher de charge (2) du véhicule par l'intermédiaire de colle, dans lequel la colle/le mastic doit être une colle ou un mastic très élastique et très absorbeur d'énergie.

12. Dispositif selon la revendication 11, **caractérisé en ce que** la colle plastique mentionnée est constituée d'une colle polyuréthanne ayant une traction d'approximativement 400 %.

13. Dispositif selon la revendication 1, **caractérisé en ce que** les évidements spéciaux pouvant être recouverts mentionnés (4) dans les parties de section de plancher (7, 8) pour des rétracteurs (5) des ceintures de fixation (39) des fauteuils roulants peuvent être constitués d'un couvercle (36) utilisé en tant que levier (38) et d'un verrou, de manière à agir en tant que cliquet à rochet pour tirer la ceinture de fixation (39) ou ceinture de sécurité vers l'intérieur, en retirant le couvercle mentionné (36) et en verrouillant à nouveau par coulissement vers l'arrière du couvercle mentionné (36) et en le repliant, dans lequel une fixation de la ceinture de sécurité (39) est effectuée par l'intermédiaire de roues dentées et d'une construction à rochet, et **en ce que** par une certaine mise en place de rétracteurs (5) au-dessus de la construction de plancher, de grands fauteuils roulants de même que de petits peuvent être transportés.
